# EUROPEAN PATENT SPECIFICATION

(11) **EP 1 841 033 B1**
(45) Date of publication and mention of the grant of the patent: **22.09.2010**
(21) Application number: 06024611.3
(22) Date of filing: 28.11.2006
(51) Int. Cl.: H02H 3/093

(54) **Circuit breaker**
Schutzschalter
Disjoncteur

(30) Priority: 30.03.2006 JP 2006095037
(43) Date of publication of application: 03.10.2007
(73) Proprietor: Mitsubishi Electric Corporation, Chiyoda-ku Tokyo 100-8310 (JP)
(72) Inventor: Sugimoto, Yasuhiro, 2-chome Chiyoda-ku Tokyo 100-8310 (JP); Nomura, Toshimitsu, 2-chome Chiyoda-ku Tokyo 100-8310 (JP)
(74) Representative: HOFFMANN EITLE

(56) References cited:
- EP-A1- 0 194 176
- EP-A2- 0 674 376
- US-A1- 3 733 517
- US-A1- 5 627 716

## Description

### BACKGROUND OF THE INVENTION

### 1. Field of the Invention

The present invention relates to a circuit breaker, such as a wiring breaker and an earth leakage breaker, and, more particularly, to an improvement of a method of setting a rated current of the circuit breaker.

### 2. Description of the Related Art

The circuit breaker performs not only a function of opening and closing an electric circuit by operating an operating handle provided therein, that is, a switching function, but an important function of breaking an electric circuit so as to prevent the burnout of an electric wire and a loading apparatus due to overcurrent. As is generally known, overcurrent detection methods are roughly classified into a thermal type, an electromagnetic type, and an electronic type. According to the electronic type method, a CPU (Central Processing Unit) built in the circuit breaker performs a computation on a signal obtained by a current transformer mounted therein. When a level of the signal reaches an operating characteristic value including a long time delay operating characteristic portion, a short time delay operating characteristic portion, and an instantaneous operating characteristic portion, set by a time delay circuit, the circuit breaker is tripped. Overcurrent detectors of the thermal or electromagnetic type naturally have operating characteristic. Each overcurrent detector of the electronic type employs a current transformer and a CPU. Thus, the overcurrent detector of the electronic type has the greatest advantage in that the operating characteristic can be changed by a user by operating a setting switch provided in the circuit breaker. Consequently, the overcurrent detector of the electronic type work effectively on finely-tuned electric-current control, more specifically, establishment of cooperation with a higher-level circuit breaker and a higher-level fuse or with a lower-level circuit breaker and a loading apparatus (for example, control of a starting current of an electric motor).

Another advantage of employing a current transformer and a CPU is that the rated current of the circuit breaker can easily be changed. Generally, anAF (Ampere Frame) of a circuit breaker is defined as the maximum value of electric current, which can be applied thereto. Rated currents thereof are determined to be within the range of the AF (for example, in a case of 225 AF, the rated currents are 125A, 150A, 175A, 200A, and 225A). Each of the rated currents can be selected by a user at a single circuit breaker. Thus, for example, when the rated current is to be increased as a load increases, the increase in the rated current may be achieved only by operating a rated current setting switch provided in the circuit breaker, without replacing the circuit breaker. The electronic type circuit breaker has inestimable advantages in usability for users and in reduction in volume of makers' stock. Incidentally, the rated current setting switch is configured so that each setting position corresponds to a rated current. In the present specification, a setting switch of this type is hereunder referred to as a setting switch of the "step adjustment type" (see, for instance, JP-A-7-211217 (see page 3, the left column, lines 8 to 14, and FIG. 2)).

Meanwhile, a set value of the operating characteristic is often set by changing the magnification of the rated current. Inevitably, the operating characteristic follows the setting of the rated current. Thus, the difference between the adj acent rated current values (25A in the aforementioned example) is relatively large. Accordingly, it is inevitable that what is called a mesh for an operating characteristic is coarse. For example, it is sometimes difficult to set a curve representing a characteristic of the circuit breaker in a space between curves respectively representing characteristics of a higher-level circuit breaker and a lower-level circuit breaker. The following method is known as a technique of solving this problem. That is, a volume is formed as the rated current setting switch. Then, a resistance value is changed by turning the volume. A resultant variation in voltage is made to be recognized by the CPU as change in the set value of the rated current. According to this method, for example, a circuit breaker with a rating 162A (= 225AX72%) can be realized. Consequently, the cooperation between apparatuses can more easily be achieved. Incidentally, in the present specification, a setting switch of this type is hereunder referred to as the setting switch of the "continuous adjustment type" (see, for instance, JP-A-5-174695 (see page 3, the right column, lines 4 to 13, and FIGS. 1 and 2)).

Such a circuit breaker is known also from the document EP-A2-0 674 376.

### SUMMARY OF THE INVENTION

As is apparent form the above description, conventional circuit breakers of the electronic type are classified into the step adjustment type and the continuous adjustment type. As the case stands, users suitably use one of the step adjustment type circuit breaker and the continuous adjustment type circuit breakers according to the conditions of an electric circuit. Therefore, when the circuit breaker to be used is changed from the step adjustment type one from the continuous adjustment type (or vice versa), the circuit breaker itself should be replaced. Thus, it is deniable that the advantages of the electronic type circuit breaker cannot fully be utilized.

The present invention is accomplished to solve the problems. Accordingly, an object of the invention is to obtain a circuit breaker of the electronic type in which a rated current setting switch of the step adjustment type and that of the continuous adjustment type are simultaneously mounted.

The invention is defined in the independent claim. Further embodiments are defined in the dependent claims.

According to one aspect, the circuit breaker includes: an electric current detection/conversion section that detects a load current flowing through an electric circuit and performs an analog-digital conversion to the detected load current to obtain a digital signal; an electric-current effective-value computation section that computes an electric-current effective-value from the digital signal obtained by the electric current detection/conversion section; a rated current setting section that sets a rated current; an operating characteristic setting section that sets an operating characteristic that is set according to a value of the load current; a time delay circuit that stores the operating characteristic; and a breaking operation signal output section that outputs a signal that causes the circuit breaker to perform a breaking operation when the load current reaches one of the levels of the operating characteristic and continues for a time corresponding to the one of the levels. The rated current setting section includes first and second rated current setting sections. The time delay circuit responds to a value set by the second rated current setting section only when the first rated current setting section sets the rated current to a maximum value.

As described above, the invention has advantages in that a circuit breaker of the electronic type, which is more and more enhanced in usability for users and which is able to further contribute to standardization of products, can be provided.

### BRIEF DESCRIPTION OF THE DRAWINGS

FIGS. 1A and 1B are front diagrams illustrating a circuit breaker according to a first embodiment of the invention. FIG. 1A shows the entire configuration of the circuit breaker. FIG. 1B shows an enlarged diagram of a characteristic setting portion.
FIG. 2 is a block circuit diagram illustrating the circuit breaker shown in FIGS. 1A and 1B.
FIG. 3 is a detailed circuit diagram illustrating a part of the characteristic setting portion of the circuit breaker shown in FIG. 2.
FIG. 4 is a graph illustrating the input/output characteristic of an output voltage V12 in a second embodiment of the invention.
FIG. 5 is a circuit diagram illustrating a circuit used to realize the input/output characteristic shown in FIG. 4.

### DETAILED DESCRIPTION OF THE INVENTION

### First Embodiment

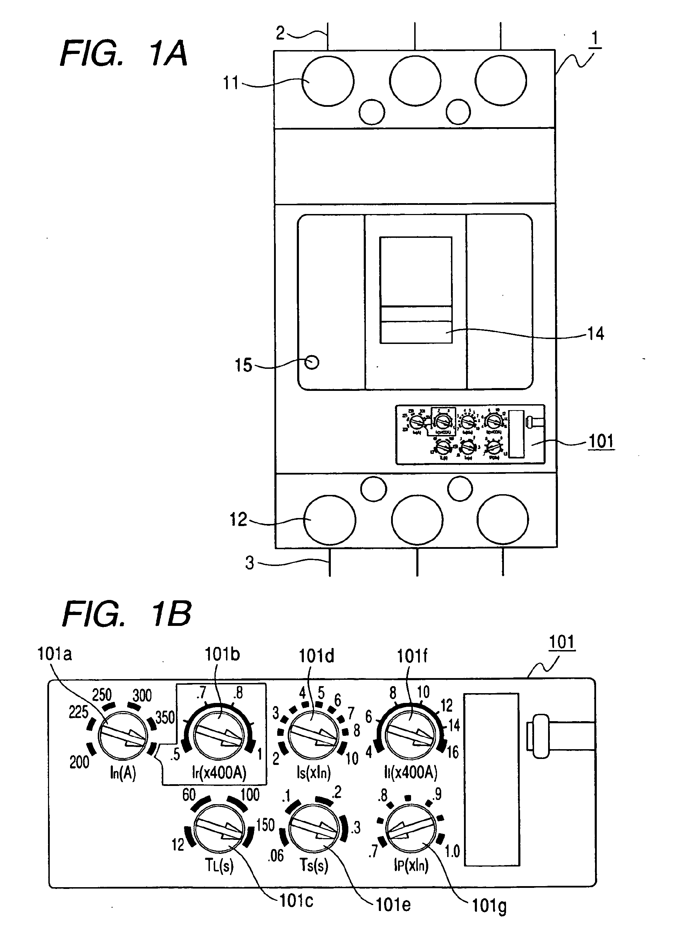

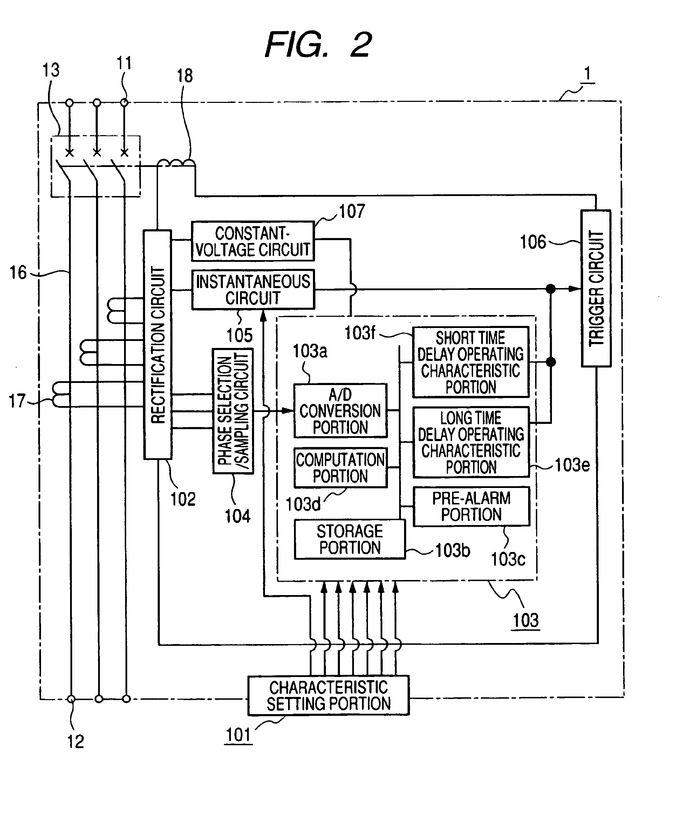

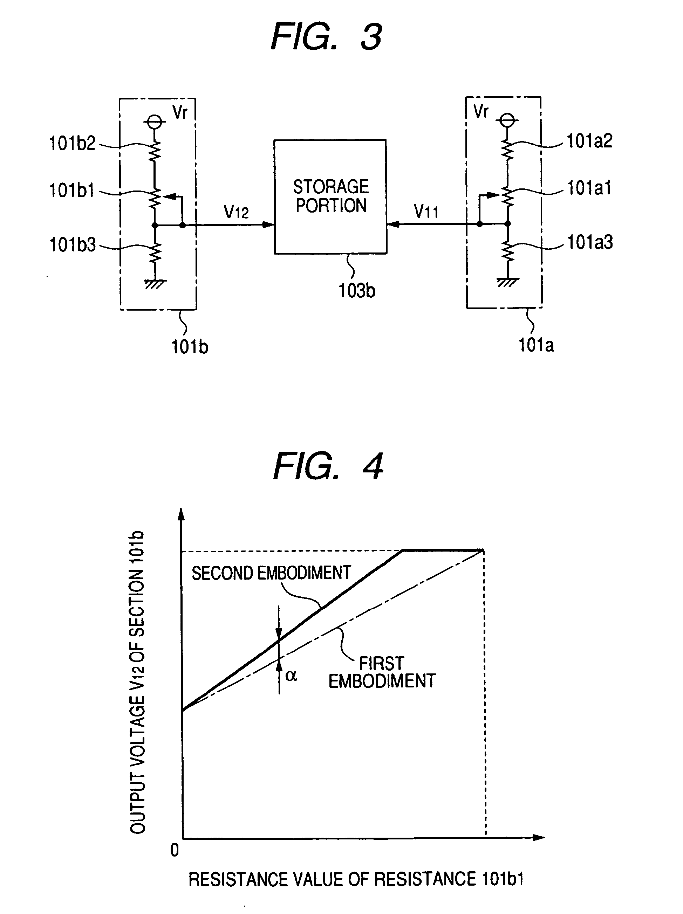

FIGS. 1A and 1B are front diagrams illustrating a circuit breaker according to a first embodiment of the invention. FIG. 1A shows the entire configuration of the circuit breaker. FIG. 1B shows an enlarged diagramof a characteristic setting portion. FIG. 2 is ablock circuit diagram illustrating the circuitbreaker shown in FIGS. 1A and 1B. FIG. 3 is a detailed circuit diagram illustrating a part of the characteristic setting portion of the circuit breaker shown in FIG. 2.

As shown in FIG. 1A, an electric circuit 2 connected to an electric power supply, such as an electric transformer (not shown), and an electric circuit 3 connected to a load, such as a motor (not shown), are connected to a set of power-supply-side terminals 11 and a set of load-side terminals 12, each of which has an insulating casing and is provided in an electronic circuit breaker (hereunder referred to as a circuit breaker). When each of the level of an electric current (hereunder referred to as a load current) flowing from the power supply to the load, that is, from the electric circuit 2 to the electric circuit 3 and an energizing time, through which the load current is applied, reaches a predetermined reference value set by a characteristic setting portion 101, electric-circuit contact points 13 (see FIG. 2) are opened to interrupt the load current. Consequently, the burnout of electric wires used in the electric circuits 2 and 3 is prevented. More specifically, according to the first embodiment, the breaker frame size of a circuit breaker 1 is 400AF as shown in FIG. 1B. The rated current of the circuit breaker 1 is set at 400A by a step-adjustment type first rated-current setting section 101a. The circuit breaker 1 is tripped according to the value of the load current as follows.
(a) When the value of the load current is twice as that of the rated current (that is, the load current is 800A) , the circuit breaker 1 is tripped after operating for 150 seconds set by a long time delay operating time setting dial 101c.
(b) When the value of the load current is set (by operating a short time delay current setting dial 101d) to be 10 times as that of the rated current (that is, the load current is 4000A), the circuit breaker 1 is tripped after operating for 0.3 seconds set by a short time delay operating time setting dial 101e.
(c) When the value of the load current is set (by an instantaneous tripping current setting dial 101f) to be 16 times that of the rated current (that is, the load current is 6400A) , the circuit breaker 1 is tripped after operating for 0.03 seconds. Incidentally, the handles 101c, 101d, 101e and 101f constitute an operating characteristic setting section. Reference numeral 101b designates a second rated current setting section of the continuous adjustment type. Reference numeral 101g denotes a pre-alarm current setting dial adapted to monitor the increasing tendency of the load current, which is less than or equal to (that is, 70% to 100% of) the rated current, and to output an alarm. Also, reference numeral 14 designates a known operating handle adapted to close and open the electric circuit contact points 13. Reference numeral 15 denotes a known tripping button used for simulating the tripping and for checking (that is, what is called a sequence check) of the switching of alarm contact points (not shown) incorporated into the circuit breaker 1.

Next, a process up to the circuit breaker being tripped is describedbelow with reference to FIG. 2. The circuit breaker 1 is provided with electric power lines 16 that connect the power-supply-side terminals 11 to the load-side terminals 12 through the electric circuit contact points 13 adapted to switch on/off the load current for each of phases (three phases in this embodiment). The circuit breaker 1 is also provided with electric current transformers 17 that are adapted to detect the load currents respectively flowing through the electric power lines 16 for each of the phases so that the electric power lines 16 pass through the current transformers 17, respectively. Signals obtained by the current transformers 17 are sent through a rectification circuit 102 to a phase selection/sampling circuit 104 adapted to detect a maximum phase from signals respectively corresponding to the phases and also adapted to output a signal corresponding to the maximum phase to a CPU 103 to be described later. On the other hand, this signal is also sent to the instantaneous circuit 105. When a maximum instantaneous value corresponding to each of the phases exceeds a predetermined reference value set by an instantaneous tripping current setting dial 101f, a trigger circuit 106 is driven and a tripping coil 18 is excited so that the circuit breaker 1 is tripped.

A signal outputted from the phase selection/sampling circuit 104 is subjected to A/D (Analog-to-Digital) conversion in an A/D conversion portion 103a. Subsequently, an effective value of a resultant signal is computed by a computation portion 103d serving as an electric current effective-value computation section according to a long time delay tripping reference value and a short time delay tripping reference value, which are stored in a storage portion 103b serving as a time delay circuit, or to a pre-alarm reference value stored in a pre-alarm circuit 103c. When a result of the computation exceeds a predetermined reference value, a long time delay operating characteristic portion 103e (or a short time delay operating characteristic portion 103f) outputs a signal, in response to which the trigger circuit 106 is driven. Alternatively, the pre-alarm portion 103c outputs a signal, in response to which an alarm output portion (not shown) is driven. Thus, the circuit breaker 1 is tripped (or an alarm is outputted). Incidentally, as described above, each of the reference values is set by the characteristic setting portion 101. Also, it is known that the A/D conversion portion 103a, the storage portion 103b, the pre-alarm portion 103c, the computation portion 103d, the long time delay operating characteristic portion 103e and the short time delay operating characteristic portion 103f are incorporated into the CPU 103, and that operating power for the CPU 103 is obtained from a constant-voltage circuit 107 through the rectification circuit 102. Incidentally, an electric current detection/conversion section includes the phase selection/sampling circuit 104 and the A/D conversion portion 103a. A breaking operation signal output section includes the long time delay operating characteristic portion 103e, the short time delay operating characteristic portion 103f, the instantaneous circuit 105 and the trigger circuit 106.

Next, the setting of the storage portion 103b by the first rated current setting section 101a and the second rated current setting section 101b is a feature of the invention and is described below in detail. As described in FIG. 3, each of the first rated current setting section 101a and the second rated current setting section 101b includes variable resistances 101a1 and 101b1, fixed resistances 101a2 and 101b2 each of which has a terminal connected to the corresponding variable resistances 101a1 and 101b1 and also has the other terminal connected to a reference voltage Vᵣ, fixed resistances 101a3 and 101b3 each of which similarly has a terminal connected to the corresponding variable resistances 101a1 and 101b1 and also has the other terminal connected to the ground, and a dial (not shown). The resistance value of each of the variable resistances 101a1 and 101b1 is changed by turning the dial. That is, electric potentials V11 and V12, which are respectively obtained at the connection point between the variable resistance 101a1 and the fixed resistance 101a3 and the connection point between the variable resistance 101b1 and the fixed resistance 101b3, are changed by turning the dial. A value representing change in each of the electric potentials is inputted to the storage portion 103b as a rated current value. The operating characteristic of the circuit breaker 1 is determined by a set value that is set by each of the operating characteristic setting section according to the rated current value.

The storage portion 103b first stores a rated current value based on the electric potential V11 between the inputted electric potentials V11 and V12. The storage portion 103b is configured to finally store a rated current value based on the electric potential V12 at that time only when the rated current value based on the electric potential V11 is once stored as the maximum value (400A in the case of the first embodiment). That is, when the first rated current setting section 101a sets the rated current value at 300A, 300A is consistently stored as the rated current value, even when the ratio of a rated current value, which is set by the second rated current setting section 101b, to the maximum value is set to be 0.8. On the other hand, when the rated current value is set by the first rated current setting section 101a at 400A, and where the ratio of a rated current value set by the second rated current setting section 101b to the maximum value is set to be 0.8, 320A (= 400x0.8) is stored as the rated current value. Change in the electric potential, which is caused by the second rated current setting section 101b, is effective only when the first rated current setting section 101a and the second rated current setting section 101b are mixedly mounted in the characteristic setting portion 101, and the maximum value is set by the first rated current setting section 101a to be the rated current value. Thus, both the "step adjustment type" setting of the rated current and the "continuous adjustment type" setting thereof can be achieved by a single circuit breaker. Consequently, a circuit breaker of the electronic type, which flexibly responds to change in the load on an electric circuit, that is, which alleviates the necessity for replacing a circuit breaker, can be provided.

Incidentally, as described above, the first rated current setting section 101a is of the "step adjustment type". Therefore, change in the electric potential V11 is divided by a certain band width. Then, an optional rated current value is set within the band width. This technique is employed, because of the facts that each setting position of the switch corresponds to a rated current, as described in JP-A-7-211217, and that the number of signal lines is large, so that the assemblability of this switch is poor, as indicate in JP-A-5-174695. However, as switches of this type, at present, what is called cord type switches (for example, 8 positions (the position "000" that corresponds to 125A, the position "001" that corresponds to 150A ...) can be set by using four wires) have been in widespread use. Therefore, the assemblability of the switch of this type is not necessarily poor. Thus, it is not inevitable to construct the first rated current setting section 101a by mainly using the variable resistances as shown in FIG. 3. That is, the cord type switch may be used. Also, the rated current value may be stored by being represented by the levels "L" and "H" of signals that respectively flow through signal lines and that are obtained by switching the cord type contact points

### Second Embodiment

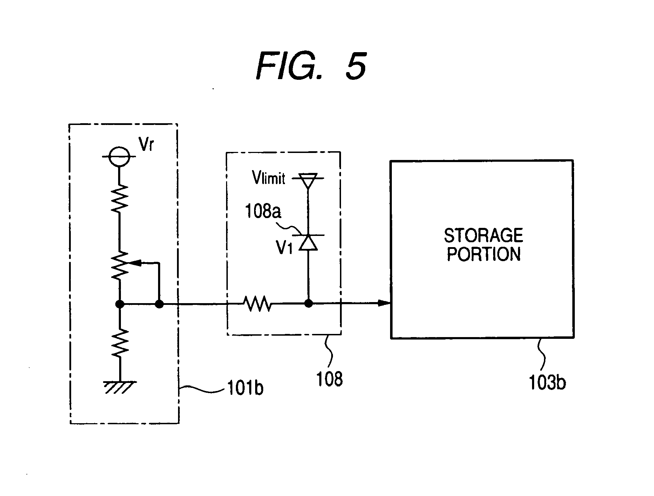

In the first embodiment, when a user prefers to a switch of the "step adjustment type", and the rated current is to be set at the maximum value, the storage portion 103bmay erroneously recognize a rated current value (for example, 400A×0.98=392A) due to a slight turn of the dial even when the second rated current setting section 101b correctly sets the rated current value at the maximum value (1.0). An improvement of the method of setting a rated current of the circuit breaker is described below as a second embodiment of the invention. Incidentally, FIG. 4 is a graph illustrating the input/output characteristic of an electric potential V12 in the second embodiment. FIG. 5 is a circuit diagram illustrating a circuit used to realize the input/output characteristic shown in FIG. 4.

As shown in FIG. 4, the voltage V12 continues to rise up to a value corresponding to the maximum resistance value of the variable resistance 101b1 with increase in the resistance value of the resistance 101b1. The linear increase of the voltage V12 to the value corresponding to the maximum resistance value, which is indicated by a dashed line, makes it difficult to set the rated current at the maximum value (400A). Thus, according to the second embodiment, the input/output characteristic is made to be saturated in the vicinity of the voltage value corresponding to the maximum resistance value, as indicated by a solid line, so that the voltage V12 is made to be constant when the resistance value is equal to or higher than a given value. Consequently, even when a rated current value set by the dial of the second rated current setting section 101b is slightly deviated from the maximum value, the storage portion 103b recognize the set value as the maximum value. Thus, users can easily set the rated current value of the circuit breaker 1 at the maximum value. Needless to say, as a result of providing a saturation region in the input/output characteristic, it is necessary to make a correction on a linear part of the input/output characteristic as indicated by α in FIG. 4 in the storage portion 103b of the first embodiment.

As shown in Fig. 5, for example, the saturation region can be realized by providing a limiter circuit 108, which includes a diode 108a having a voltage limit Vₗᵢₘᵢₜ and an on-voltage V_{f}, between the second rated current setting section 101b and the storage portion 103b. That is, each circuit constant thereof is set so that an inflection point between the linear region and the saturation region corresponds to the on-voltage V_{f} and that the voltage difference (Vₗᵢₘᵢₜ - V_{f}) corresponds to the voltage value V12 corresponding to the maximumvalue of the rated current. In the linear region, the diode 108a is not turned on, so that the limiter circuit 108 does not function, and that the voltage value corresponding to the resistance value of the variable resistance 101b1 is recognized and stored by the storage portion 103b as the output voltage V12, without being modified. In the saturation region, the diode 108a is turned on, so that the storage portion 103b recognizes the voltage V12 as a constant voltage (Vₗᵢₘᵢₜ - V_{f}), independent of increase in the resistance value of the variable resistance 101b1. Incidentally, as long as the inflection between the linear region and the saturation region can be realized, even when the rated current setting section employs an element other than a diode, for example, employs a zener diode, the circuit breaker does not depart from the scope of the invention. Additionally, the circuit breaker may be configured by realizing the inflection therebetween by performing what is called software processing in the CPU 103, together with the correction.

## Claims

1. A circuit breaker (1) comprising:
an electric current detection/conversion section (104, 103a) configured to detect a load current flowing through an electric circuit (3) and to perform an analog-digital conversion to the detected load current to obtain a digital signal;
an electric-current effective-value computation section (103d) configured to compute an electric-current effective-value from the digital signal obtained by the electric current detection/conversion section (104, 103a);
a rated current setting section (101a, 101b) configured to set a rated current;
an operating characteristic setting section (101c, 101d, 101e, 101f) configured to set an operating characteristic that is set according to a value of the load current;
a time delay circuit (103b) configured to store the operating characteristic; and
a breaking operation signal output section (103e, 103f, 105, 106) configured to output a signal that causes the circuit breaker (1) to perform a breaking operation when the load current reaches one of the levels of the operating characteristic and continues for a time corresponding to the one of the levels, **characterizing in that**
the rated current setting section (101a, 101b) includes first and second rated current setting sections (101a, 101b), and
the time delay circuit (103b) is configured to respond to a value set by the second rated current setting section (101b) only when the first rated current setting section (101a) sets the rated current to a maximum value.

2. The circuit breaker (1) according to claim 1, further comprising a saturation unit (108) configured to cause the time delay circuit (103b) to determine that the rated current of the circuit breaker (1) is the maximum value when the value set by the second rated current value setting section (101b) is in the vicinity of the maximum value.

3. The circuit breaker (1) according to claim 2, wherein the saturation unit (108) is implemented by an electric component disposed outside of a CPU (103) including the electric-current effective-value computation section (103d), and the time delay circuit (103b).

4. The circuit breaker (1) according to claim 2, wherein the saturation unit (108) is accommodated in a CPU (103) including the electric-current effective-value computation section (103d) and the time delay circuit (103d).

5. The circuit breaker (1) according to any one of the preceding claims, wherein
the first rated current setting section (101a) is a step-adjustment type rated current setting section (101a); and
the second rated current setting section (101b) is a continuous adjustment type rated current setting section (101b).

## Patentansprüche

1. Schutzschalter (1), umfassend:
Elektrischer-Strom-Erfassungs-/Umwandlungsabschnitt (104, 103a), der konfiguriert ist, um einen Laststrom zu erfassen, der durch eine elektronische Schaltung (3) fließt und, um eine Analog/Digital-Umwandlung auf den erfassten Laststrom durchzuführen, um ein digitales Signal zu erhalten;
einen Elektrischer-Strom-Effektivwert-Berechnungsabschnitt (103d), der konfiguriert ist, um einen Elektrischer-Strom-Effektivwert zu berechnen von dem digitalen Signal, das durch den Elektrischer-Strom-Erfassungs-/Umwandlungsabschnitt (104, 103a) erhalten wird;
einen Nennstromeinstellabschnitt (101a, 101b), der konfiguriert ist, um einen Nennstrom einzustellen;
einen Operations-Charaktistik-Einstellabschnitt (101c, 101d, 101e, 101f), der konfiguriert ist, um eine Operations-Charakteristik zu setzen, die entsprechend einem Wert des Laststroms gesetzt ist;
eine Zeitverzögerungsschaltung (103b), die konfiguriert ist, um die Operations-Charakteristik zu speichern; und
einen Trennoperationssignal-Ausgabeabschnitt (103e, 103f, 105, 106), der konfiguriert ist, um ein Signal auszugeben, das verursacht, dass der Schutzschalter (1) eine Trennoperation ausführt, wenn der Laststrom eines der Level der Operations-Charakteristik erreicht und eine Zeit entsprechend dem einen der Level andauert,
**dadurch gekennzeichnet, dass**
der Nennstromeinstellabschnitt (101a, 101b) erste und zweite Nennstromeinstellabschnitte (101a, 101b) beinhaltet, und
die Zeitverzögerungsschaltung (103b) konfiguriert ist, um auf einen Wert, der durch den zweiten NennstromEinstellabschnitt (101b) gesetzt ist, zu antworten nur, wenn der erste Nennstromeinstellabschnitt (101a) den Nennstrom auf einen Maximalwert setzt.

2. Schutzschalter (1) nach Anspruch 1, ferner umfassend eine Sättigungseinheit (108), die konfiguriert ist, um zu verursachen, dass die Zeitverzögerungsschaltung (103b) bestimmt, dass der Nennstrom des Schutzschalters (1) der Maximalwert ist, wenn der Wert, der durch die zweite Nennstromeinstelleinheit (101b) gesetzt ist, in der Nähe des Maximalwerts ist.

3. Schutzschalter (1) nach Anspruch 2, wobei die Sättigungseinheit (108) implementiert ist durch eine elektronische Komponente, die außerhalb eines CPU (103) angeordnet ist, beinhaltend die Elektronischer-Strom-Effektivwert-Berechnungseinheit (103d), und die Zeitverzögerungsschaltung (103b).

4. Schutzschalter (1) nach Anspruch 2, wobei die Sättigungseinheit (108) in einem CPU (103) aufgenommen ist, der den Elektrischer-Strom-Effektivwert-Berechnungsabschnitt (103d) und die Zeitverzögerungsschaltung (103d) beinhaltet.

5. Schutzschalter (1) nach einem der vorangegangenen Ansprüche, wobei
der erste Nennstromeinstellsabschnitt (101a) ein Stromeinstellabschnitt vom Schrittanpassungstyp (101a) ist; und
der zweite Nennstromeinstellabschnitt (101b) ein Stromeinstellabschnitt (101b) vom kontinuierlichen Anpassungstyp ist.

## Revendications

1. Disjoncteur (1) comprenant :
une section de détection/conversion de courant électrique (104, 103a) configurée pour détecter un courant de charge circulant à travers un circuit électrique (3) et pour appliquer une conversion analogique-numérique au courant de charge détecté afin d'obtenir un signal numérique ;
une section de calcul de valeur efficace de courant électrique (103d) configurée pour calculer une valeur efficace de courant électrique à partir du signal numérique obtenu par la section de détection/conversion de courant électrique (104, 103a) ;
une section de détermination de courant assigné (101a, 101b) configurée pour déterminer un courant assigné ;
une section de détermination de caractéristique de fonctionnement (101c, 101d, 101e, 101f) configurée pour déterminer une caractéristique de fonctionnement qui est déterminée en fonction d'une valeur du courant de charge ;
un circuit à retard (103b) configuré pour mémoriser la caractéristique de fonctionnement ; et
une section de sortie de signal d'opération de coupure (103e, 103f, 105, 106) configurée pour délivrer un signal qui amène le disjoncteur (1) à effectuer une opération de coupure lorsque le courant de charge atteint un des niveaux de la caractéristique de fonctionnement et se maintient pendant un temps correspondant audit un des niveaux,
**caractérisé en ce que**
la section de détermination de courant assigné (101a, 101b) comprend des première et deuxième sections de détermination de courant assigné (101a, 101b), et
le circuit à retard (103b) est configuré pour ne réagir à une valeur déterminée par la deuxième section de détermination de courant assigné (101b) que lorsque la première section de détermination de courant assigné (101a) détermine le courant assigné à une valeur maximale.

2. Disjoncteur (1) selon la revendication 1, comprenant en outre une unité de saturation (108) configurée pour amener le circuit à retard (103b) à déterminer que le courant assigné du disjoncteur (1) est la valeur maximum lorsque la valeur déterminée par la deuxième section de détermination de valeur de courant assigné (101b) est dans le voisinage de la valeur maximum.

3. Disjoncteur (1) selon la revendication 2, dans lequel l'unité de saturation (108) est mise en oeuvre par un composant électrique disposé à l'extérieur d'une CPU (103) comprenant la section de calcul de valeur efficace de courant électrique (103d) et le circuit à retard (103b).

4. Disjoncteur (1) selon la revendication 2, dans lequel l'unité de saturation (108) est logée dans une CPU (103) comprenant la section de calcul de valeur efficace de courant électrique (103d) et le circuit à retard (103b).

5. Disjoncteur (1) selon l'une quelconque des revendications précédentes, dans lequel
la première section de détermination de courant assigné (101a) est une section de détermination de courant assigné du type à ajustement par pas (101a) ; et
la deuxième section de détermination de courant assigné (101b) est une section de détermination de courant assigné du type à ajustement continu (lOlb).
